# EUROPÄISCHE PATENTSCHRIFT

(11) **EP 3 389 952 B1**
(45) Veröffentlichungstag und Bekanntmachung des Hinweises auf die Patenterteilung: **17.02.2021**
(21) Anmeldenummer: 16819299.5
(22) Anmeldetag: 13.12.2016
(51) Int. Cl.: B25F 5/02, B23D 45/16, B27B 9/00

(54) **AKKUBETRIEBENE HANDWERKZEUGMASCHINE III**
BATTERY OPERATED MACHINE TOOL III
MACHINE-OUTIL III SUR BATTERIE

(30) Priorität: 17.12.2015 EP 15200669
(43) Veröffentlichungstag der Anmeldung: 24.10.2018
(73) Patentinhaber: Hilti Aktiengesellschaft, 9494 Schaan (LI)
(72) Erfinder: BAXIVANELIS, Konstantin, 86916 Kaufering (DE)
(74) Vertreter: Hilti Aktiengesellschaft Corporate Intellectual Property
(86) Internationale Anmeldenummer: PCT/EP2016/080717
(87) Internationale Veröffentlichungsnummer: WO 2017/102678

(56) Entgegenhaltungen:
- EP-A1- 2 540 153
- CN-B- 103 299 835
- CN-U- 202 819 063
- US-A- 6 161 293
- US-B1- 6 329 788

## Beschreibung

Die vorliegende Erfindung betrifft eine akkubetriebene Handwerkzeugmaschine, insbesondere eine Handkreissäge, mit einem Elektromotor zum rotatorischen Antreiben eines an der Handwerkzeugmaschine anzuordnenden Werkzeugs, insbesondere eines Sägeblatts. Die Handwerkzeugmaschine weist, jeweils bezogen auf eine Vorschubrichtung der Handwerkzeugmaschine, einen vorderen und hinteren Handgriff auf. Ferner weist die Handwerkzeugmaschine eine Aufnahmebucht zur Aufnahme eines Wechselakkus auf. Der Wechselakku dient zur Versorgung des Elektromotors.

Solche Handwerkzeugmaschine sind grundsätzlich aus dem Stand der Technik bekannt, zum Beispiel aus CN 103 299 835B, CN 202 819 063U, und EP 2 540 153A.

Ebenfalls aus dem Stand der Technik bekannt sind Handwerkzeugmaschinen, deren Elektromotor ausgebildet ist, über ein Schneckengetriebe der Handwerkzeugmaschine ein Werkzeug, z.B. in Form eines Sägeblatts, anzutreiben. Bei solchen als Handkreissäge ausgestalteten Handwerkzeugmaschinen, die insbesondere aus den USA bekannt sind und typischerweise als "worm-drive saw" (WDS) bezeichnet werden, erlaubt das Schneckengetriebe eine rechtwinklige Anordnung der Motorachse (Schneckenwelle) und der Werkzeugachse, d.h. Sägeblattachse (Abtriebsachse für das Sägeblatt). Dadurch weisen als WDS ausgebildete Handkreissägen eine längliche, weniger breite Form als in Europa bevorzugte "side winder" (SW) auf, bei denen Motorachse und Sägeblattachse koaxial, zumindest aber parallel zueinander angeordnet sind.

Es ist Aufgabe der vorliegenden Erfindung, eine Handkreissäge mit verbesserter Handhabbarkeit bereitzustellen.

Die Aufgabe wird dadurch gelöst, dass der hintere Handgriff um eine Schwenkachse vorzugsweise seitlich ausschwenkbar gelagert ist, derart, dass, wenn der hintere Handgriff in einem ausgeschwenkten Zustand befindlich ist, die Aufnahmebucht zur Auf- oder Entnahme des Wechselakkus freigegeben ist, und, wenn der hintere Handgriff in einem eingeschwenkten Zustand befindlich ist, die Auf- oder Entnahme des Wechselakkus in die oder aus der Aufnahmebucht gesperrt ist.

Vorteilhafterweise erlaubt die erfindungsgemäße akkubetriebene Handwerkzeugmaschine ein besonders leichtes Einbringen beziehungsweise Entnehmen eines Wechselakkus. Bereits dadurch weist die erfindungsgemäße Handkreissäge eine verbesserte Handhabbarkeit gegenüber aus dem Stand der Technik bekannten akkubetriebenen Handwerkzeugmaschinen, insbesondere Handkreissägen, auf.

Die Erfindung schließt darüber hinaus die Erkenntnis ein, dass die längliche, weniger breite Form der als WDS ausgebildeten Handkreissägen des Standes der Technik eine kopflastige Ergonomie bedingt, die für sogenannte "drop cuts", also Schnitte in vertikaler Richtung von oben nach unten, bevorzugt sind. Dadurch, dass die Aufnahmebucht zur Aufnahme des Wechselakkus durch Schwenken des hinteren Handgriffs freigebbar ist, wird neben dem bereits erwähnten vorteilhaft einfachen Akkuwechsel auch die bevorzugte Ergonomie einer als WDS ausgebildeten Handkreissäge konstruktiv zumindest begünstigt.

Vorzugsweise ist eine Länge der Handwerkzeugmaschine entlang der Vorschubrichtung wenigstens doppelt so groß wie eine Breite der Handwerkzeugmaschine quer zur Vorschubrichtung. Unter Vorschubrichtung soll im Rahmen der vorliegenden Erfindung eine Schubrichtung beim bestimmungsgemäßen Arbeiten mit der Handwerkzeugmaschine zu verstehen sein, das heißt insbesondere nicht eine möglicherweise zeitweise eingenommene Schubrichtung zum Lösen eines verklemmten Werkzeugs, insbesondere eines Sägeblatts, aus einem Sägestück.

In einer besonders bevorzugten Ausgestaltung ist die Schwenkachse in Vorschubrichtung der Handkreissäge orientiert. Vorzugsweise weist die Schwenkachse einen Schwenkpunkt auf der oberhalb, bevorzugt ausschließlich oberhalb, einer Bodenebene liegt und/oder unterhalb, vorzugsweise ausschließlich unterhalb, einer zu dieser Bodenebene parallelen Parallelebene liegt. Die Bodenebene kann durch eine im Arbeitsbetrieb ein Werkstück berührende Unterseite einer in Null-Grad-Stellung befindlichen und/oder einer auf maximale Schnitttiefe eingerichteten Bodenplatte der Handwerkzeugmaschine aufgespannt sein. Die Bodenplatte ist in Null-Grad-Stellung befindlich, wenn die im Arbeitsbetrieb ein Werkstück berührende Unterseite der Bodenplatte senkrecht zum flächigen Sägeblatt steht.

Die zur Bodenebene parallele Parallelebene weist vorzugsweise einen Abstand zur Bodenebene auf. In einer bevorzugten Ausgestaltung liegt vorzugsweise die Rotationsachse des Werkzeugs in der Parallelebene. In dieser bevorzugten Ausgestaltung ist der Schwenkpunkt vorzugsweise unterhalb der Aufnahmebucht angeordnet und besonders bevorzugt in einer Stabilisierungsschiene der Handwerkzeugmaschine ausgebildet. Mit anderen Worten ist in dieser bevorzugten Ausgestaltung der hintere Handgriff "unten" an der Handkreissäge angeschlagen.

Es hat sich als vorteilhaft herausgestellt, wenn der Schwenkpunkt vorzugsweise ausschließlich in einer dem hinteren Handgriff zugewandten Raumseite einer Achsebene liegt, wobei die Achsebene durch die Rotationsachse und einen Radius des Werkzeugs aufgespannt ist. Vorzugsweise schließt die Achsebene ausgehend von einem in Vorschubrichtung vor der Rotationsachse gelegenen Abschnitt einer Bodenebene und in Drehrichtung des Werkzeugs, einen Winkel von 90 Grad ein.

Ebenfalls bevorzugt liegt der Schwenkpunkt, vorzugsweise ausschließlich, in einer dem vorderen Handgriff zugewandten Raumseite einer Abstandsebene ABE. Bevorzugt ist die Abstandsebene parallel zur Achsebene und/oder ist weist zu der Achsebene einen Abstand auf, der wenigstens so groß und/oder höchstens doppelt so groß ist, wie ein maximal möglicher Werkzeugdurchmesser einer jeweiligen Handwerkzeugmaschine.

Der Schwenkpunkt kann, vorzugsweise ausschließlich, in einer dem vorderen Handgriff zugewandten Raumseite einer Handgriffebene liegen. Vorzugsweise wird die Handgriffebene durch die Rotationsachse und einen Radius des Werkzeugs aufgespannt, wobei die Handgriffebene, ausgehend von einem in Vorschubrichtung hinter der Rotationsachse gelegenen Abschnitt einer Bodenebene und in entgegengesetzter Drehrichtung des Werkzeugs, einen Winkel von wenigstens 20 Grad und vorzugsweise wenigstens 30 Grad einschließt. In dieser bevorzugten Ausgestaltung ist der Schwenkpunkt vorzugsweise oberhalb der Aufnahmebucht angeordnet und besonders bevorzugt in einer Profilschiene der Handwerkzeugmaschine ausgebildet. Mit anderen Worten in dieser bevorzugten Ausgestaltung der hintere Handgriff "oben" an der Handwerkzeugmaschine angeschlagen.

Es sei an dieser Stelle ausdrücklich darauf hingewiesen, dass die gerade definierten Lagebedingungen der Schwenkachse sowohl für sich genommen als auch in Kombination gelten können. Derart schließen beispielsweise die Bodenebene, die Achsebene, die Abstandsebene und die Parallelebene einen Raumbereich in Form eines Quaders ein, in dem der Schwenkpunkt angeordnet bzw. anzuordnen ist.

In einer bevorzugten Ausgestaltung liegt der Schwenkpunkt in einer Stabilisierungsschiene der Handwerkzeugmaschine. Alternativ kann der Schwerpunkt in einer Profilschiene der Handwerkzeugmaschine liegen. Die Schwenkachse kann durch einen Zylinderstift verlaufen, der in Stiftaufnahme gelagert ist.

Es hat sich als vorteilhaft herausgestellt, wenn ein durch einen Schwenkanschlag und einen Gegenanschlag beschränkter Schwenkwinkel wischen eingeschwenkten Zustand und ausgeschwenkten des hinteren Handgriffs größer als 30 Grad ist, vorzugsweise 90 Grad beträgt und höchsten 330 Grad ist.

Bevorzugt weist die Handwerkzeugmaschine einen Rastmechanismus auf, der ausgebildet ist, den hinteren Handgriff in dem ausgeschwenkten Zustand sicher zu halten, vorzugsweise bis zum Überwinden einer Federsperrkraft durch den Anwender.

Die Federsperrkraft kann beispielsweise durch ein Druckstück mit Kugel und Feder und wenigstens einer korrespondierenden Rastvertiefung ausgebildet sein. Vorzugsweise ist ein derartiger Mechanismus nahe der Schwenkachse ausgebildet, was einen besonders kompakten Aufbau ermöglicht. Der Rastmechanismus kann alternativ durch eine magnetische Paarung, vorzugsweise im Bereich des Schwenkanschlags und/oder des Gegenanschlags, ausgebildet sein. Ebenfalls ist es möglich, den Rastmechanismus mittels Schlingfederreibung zu realisieren. Jede dieser Möglichkeiten ist derart ausgestaltet, dass der hintere Handgriff so lange in dem ausgeschwenkten Zustand sicher gehalten wird, bis eine durch den Anwender auf den hinteren Handgriff aufgebrachte Kraft die Federsperrkraft des Rastmechanismus überwindet.

In einer besonders bevorzugten Ausgestaltung weist der hintere Handgriff einen Verriegelungsmechanismus auf, der ausgebildet ist, den hinteren Handgriff in seinem eingeschwenkten Zustand zu fixieren und/oder bedarfsweise für eine Schwenkbewegung freizugeben. Es hat sich als vorteilhaft herausgestellt, wenn unterhalb der Aufnahmebucht eine Stabilisierungsschiene angeordnet ist, die vorzugsweise entgegen der Vorschubrichtung über die Aufnahmebucht hinaus kragt und an der der hintere Handgriff in seinem eingeschwenkten Zustand vorzugsweise fixiert werden kann.

Eine Fixierung des hinteren Handgriffs in seinem eingeschwenkten Zustand an der Stabilisierungsschiene ermöglicht eine hohe Stabilität des hinteren Handgriffs und somit einen optimalen Kraftfluss in Vorschubrichtung der Handwerkzeugmaschine.

Es hat sich als vorteilhaft herausgestellt, wenn der Verriegelungsmechanismus einen Zapfen umfasst, der in eine dafür vorgesehene Ausnehmung, die vorzugsweise an der Stabilisierungsschiene oder Profilschiene ausgebildet ist, eingreifen kann. Gemäß einer alternativen Ausgestaltungsform kann der Verriegelungsmechanismus auch durch einen Haken mit einer entsprechenden Öse ausgestaltet sein. Dies vorzugsweise wenn der hintere Handgriff im eingeschwenkten Zustand ist. Über einen solchen Verriegelungsmechanismus wird der hintere Handgriff derart verriegelt, dass ein besonders sicherer Betrieb der Handwerkzeugmaschine durch Vermeiden eines ungewünschten Schwenkens des hinteren Handgriffs realisiert wird. Der Verriegelungsmechanismus kann ausgebildet sein, dass er bei eingeschwenktem Zustand selbsttätig verriegelt. Alternativ kann der Verriegelungsmechanismus ausgebildet sein, durch die Betätigung eines Bedienelements durch den Anwender verriegelt zu werden.

Bevorzugt wird die Sicherheit der Handkreissäge dadurch erhöht, dass diese einen Sicherheitsschalter aufweist, der mit dem hinteren Handgriff verbunden ist und ausgebildet ist, in dem entriegelten Zustand des Verriegelungsmechanismus und/oder beim Vorliegen des ausgeschwenkten Zustands eine Stromzufuhr zum Elektromotor zu unterbrechen. Der Sicherheitsschalter kann unmittelbar die Hauptstromversorgung der Handwerkzeugmaschine unterbrechen oder aber einer Elektronik den Zustand des Verriegelungsmechanismus übermitteln und über eine in der Elektronik vorgesehene Logik ein Anlaufen der Handwerkzeugmaschine, insbesondere einer Säge, trotz Drückens des Ein/Aus-Schalters unterbinden. Der Sicherheitsschalter kann elektrisch, magnetisch und/oder optisch ausgebildet sein. Mehrere Möglichkeiten der Anordnung des Sicherheitsschalters sind denkbar. Der Sicherheitsschalter kann beispielsweise Teil des mechanischen Schaltelements sein oder mit diesem mechanisch verbunden sein. Alternativ oder zusätzlich kann der Sicherheitsschalter im Bereich der Schwenkachse oder des Schwenkpunts des hinteren Handgriffs angeordnet sein. Alternativ oder zusätzlich ist es denkbar, den Sicherheitsschalter in einem Bereich des hinteren Handgriffs anzuordnen, der bei eingeschwenktem Zustand des hinteren Handgriffs in Kontakt mit einem in der Aufnahmebucht aufgenommenen Wechselakku steht. Es wurde als vorteilhaft erkannt, den Sicherheitsschalter als Teil des mechanischen Schaltelements auszubilden.

In einer weiteren bevorzugten Ausgestaltung weist die Aufnahmebucht eine Schienenführung auf, über die der Wechselakku in die Aufnahmebucht eingeschoben und aus dieser herausgezogen werden kann. Vorzugsweise ist die Schienenführung und/oder der Wechselakku derart ausgebildet, dass ein Herausziehen des Wechselakkus erst nach Betätigung eines Freigabeelements möglich ist. Vorzugsweise ist das Freigabeelement als Knopf ausgebildet und am Wechselakku angeordnet.

Es hat sich ebenfalls als vorteilhaft herausgestellt, wenn eine Handangriffsfläche des hinteren Handgriffs, bezogen auf die Vorschubrichtung der Handwerkzeugmaschine, hinter dem in der Aufnahmebucht aufgenommenen Wechselakku aufgenommen ist. In einer besonders bevorzugten Ausgestaltung ist das Werkzeug, bezogen auf die Vorschubrichtung der Handwerkzeugmaschine, links oder rechts vom Elektromotor angeordnet. Die Ausgangswelle des Elektromotors kann parallel zur Rotationsachse des Sägeblatts verlaufen. Die Handkreissäge ist vorzugsweise zumindest doppelt so lang wie breit. Vorzugsweise ist die Handkreissäge frei von einem Schneckengetriebe. Derart kann die beispielsweise als akkubetriebene Handkreissäge ausgestaltete Handwerkzeugmaschine die Ergonomie einer als WDS bereitgestellten und in Form einer Handkreissäge ausgestalteten Handwerkzeugmaschine erreichen.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination.

In den Figuren sind gleiche und gleichartige Komponenten mit gleichen Bezugszeichen beziffert. Es zeigen:
- Fig. 1: ein erstes bevorzugtes Ausführungsbeispiel einer erfindungsgemäßen akkubetriebenen Handwerkzeugmaschine in Form einer Handkreissäge in Seitenansicht, wobei der hintere Handgriff unten angeschlagen ist;
- Fig. 2: eine Rückansicht des Ausführungsbeispiels aus Fig. 1, wobei der hintere Handgriff im eingeschwenkten Zustand befindlich ist;
- Fig. 3: eine Rückansicht des Ausführungsbeispiels aus Fig. 1, wobei der hintere Handgriff im ausgeschwenkten Zustand befindlich ist;
- Fig. 4: eine perspektivische Darstellung der Ansicht aus Fig. 3, wobei der Wechselakku außerhalb der Aufnahmebucht befindlich ist;
- Fig. 5: ein zweiten bevorzugtes Ausführungsbeispiel einer erfindungsgemäßen akkubetriebenen Handwerkzeugmaschine in Form einer Handkreissäge in Seitenansicht, wobei der hintere Handgriff oben angeschlagen ist;
- Fig. 6: eine Rückansicht des Ausführungsbeispiels aus Fig. 5, wobei der hintere Handgriff im eingeschwenkten Zustand befindlich ist;
- Fig. 7: eine Rückansicht des Ausführungsbeispiels aus Fig. 5, wobei der hintere Handgriff im ausgeschwenkten Zustand befindlich ist;
- Fig. 8: eine perspektivische Darstellung der Ansicht aus Fig. 7, wobei der Wechselakku außerhalb der Aufnahmebucht befindlich ist;
- Fig. 9: eine andere perspektivische Darstellung der Ansicht aus Fig. 7.

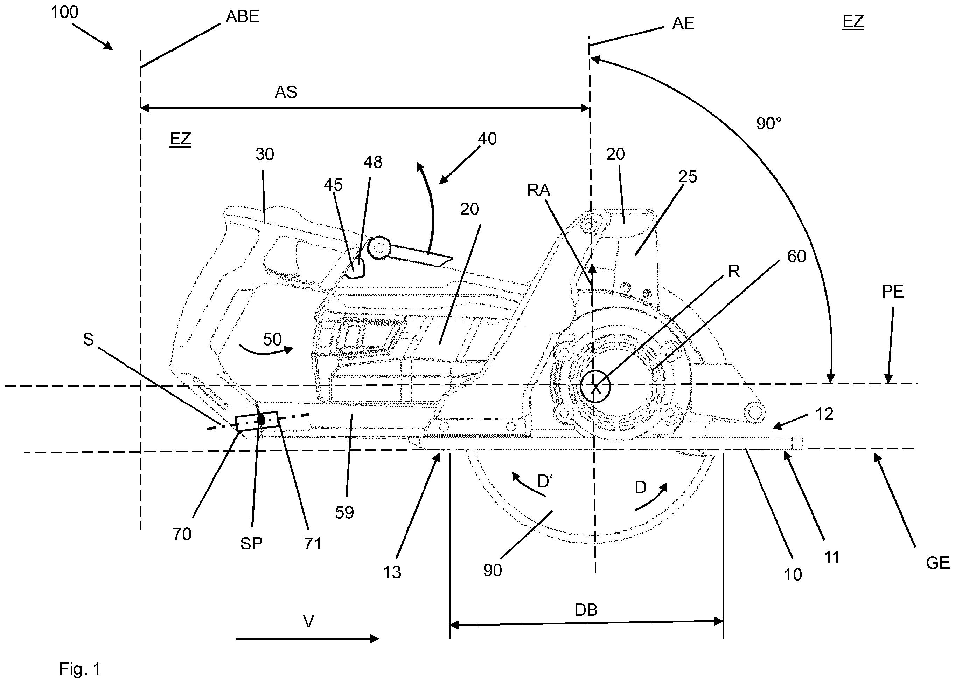

Ein bevorzugtes Ausführungsbeispiel einer als akkubetriebenen Handkreissäge ausgestalteten Handwerkzeugmaschine 100 ist in Fig. 1 dargestellt. Die akkubetriebene Handkreissäge 100 weist einen Elektromotor 60 zum rotatorischen Antreiben eines an der Handkreissäge 100 angeordneten als Sägeblatt ausgestalteten Werkzeugs 90 auf. Das Sägeblatt 90 wird rotatorisch um eine Rotationsachse R angetrieben, die vorliegend in die Zeichenebene hinein weist. Im bestimmungsgemäßen Sägebetrieb dreht sich das Sägeblatt 90 in Drehrichtung D. Mit anderen Worten: dreht sich das Sägeblatt 90 derart, dass die Handkreissäge 100 im Sägebetrieb an ein zu sägendes Werkstück (nicht gezeigt) herangezogen wird.

Im bestimmungsgemäßen Betrieb wird die Handkreissäge 100 in Vorschubrichtung V vorgeschoben. Die Vorschubrichtung ist in Fig. 1 mit einem horizontalen nach rechts weisenden Pfeil dargestellt. Die Handkreissäge 100 weist einen vorderen Handgriff 20 und einen hinteren Handgriff 30 auf. Bezogen auf die Vorschubrichtung V der Handkreissäge 100 ist der vordere Handgriff 20 vor dem hinteren Handgriff 30 angeordnet.

Des Weiteren weist die Handkreissäge 100 eine Aufnahmebucht 50 zur Aufnahme eines Wechselakkus 200 auf. In dem in Fig. 1 dargestellten Ausführungsbeispiel ist der Wechselakku 200 zum Betrieb des Elektromotors 60 der als Handkreissäge ausgestalteten Handwerkzeugmaschine 100 in der Aufnahmebucht 50 vollständig aufgenommen.

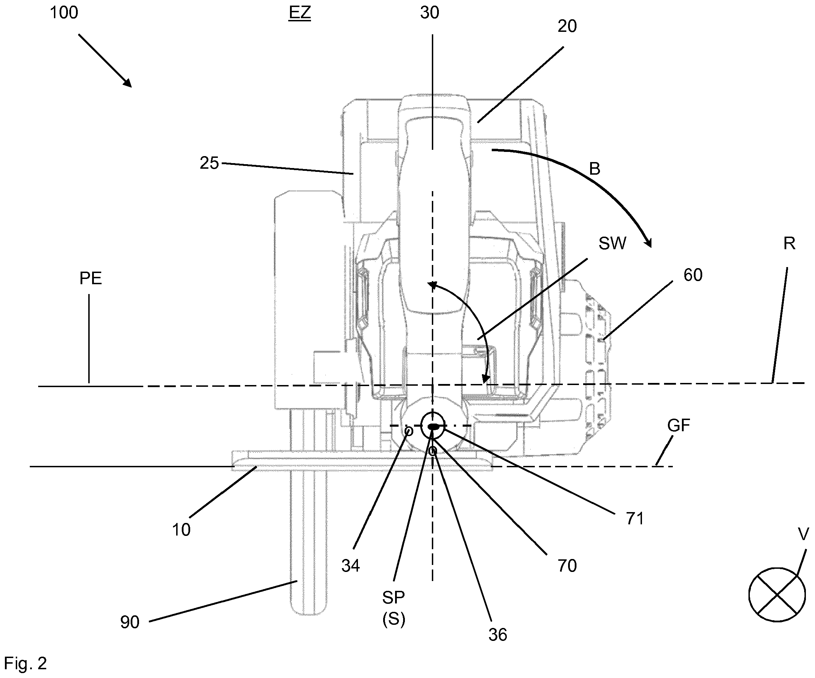

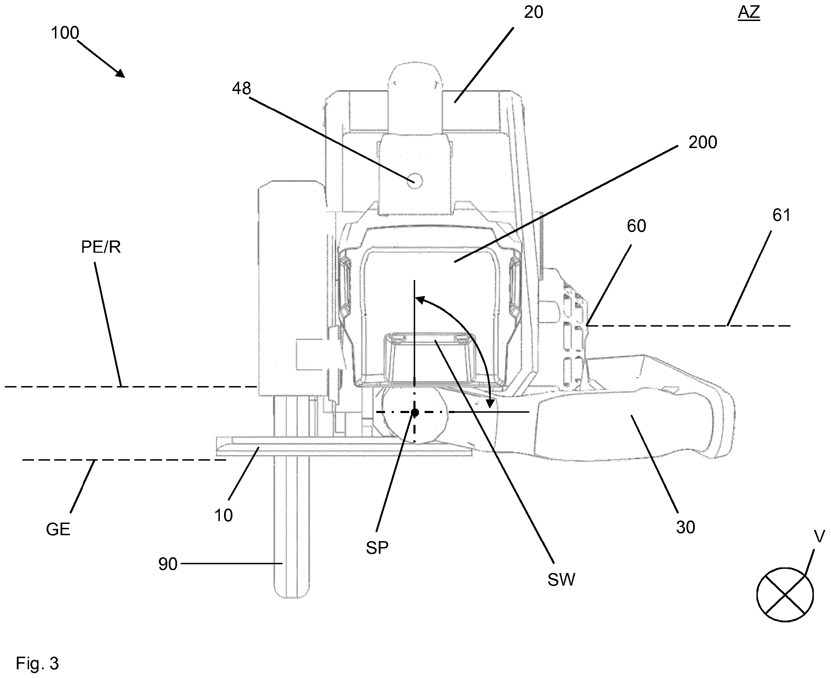

Erfindungsgemäß ist der hintere Handgriff 30 um eine Schwenkachse S schwenkbar gelagert. Der hintere Handgriff 30 ist derart um die Schwenkachse S schwenkbar gelagert, dass, wenn der hintere Handgriff 30 in einem ausgeschwenkten Zustand (vgl. Fig. 3) befindlich ist, die Aufnahmebucht 50 zur Auf- oder Entnahme des Wechselakkus 200 freigegeben ist. Ferner ist der hintere Handgriff 30 um die Schwenkachse S derart schwenkbar gelagert, dass, wenn der hintere Handgriff 30 in eingeschwenktem Zustand EZ (vgl. Fig. 1 und 2) befindlich ist, die Auf- oder Entnahme des Wechselakkus 200 in die oder aus der Aufnahmebucht 50 gesperrt ist.

Wie aus einer Zusammenschau von Fig. 2 und Fig. 3 ersichtlich wird, ist der hintere Handgriff 30 seitlich nach unten ausschwenkbar gelagert, d.h. der hintere Handgriff 30 schwenkt um einen gedachten Bogen B (in Fig. 2 durch eine Pfeil angedeutet), dessen Krümmungsmittelpunkt auf der Schwenkachse S liegt.

Bei einem bevorzugten Ausführungsbeispiel der Fig. 1 ist die Schwenkachse S in Vorschubrichtung V der Handkreissäge 100 orientiert. Die Schwenkachse S liegt dabei nicht notwendigerweise parallel zur Vorschubrichtung V, sonder kann - wie aus Fig. 1 ersichtlich ist - leicht schräg zur Vorschubrichtung V verlaufen, beispielsweise mit einem maximalen Neigungswinkel von 20 Grad.

Die Schwenkachse S verläuft ausschließlich oberhalb einer Bodenebene GE. Die Bodenebene GE kann auch als Grundplattenebene ausgestaltet sein. Die Bodenebene GE entspricht dabei der Grundplattenebene. Hierbei weist die als Handkreissäge ausgestaltete Handwerkzeugmaschine 100 eine Bodenplatte 10 auf. Die Bodenplatte kann auch als Grundplatte bezeichnet werden. Dies ist insbesondere der Fall, wenn die Handwerkzeugmaschine eine Grundplatte enthält. Es ist jedoch auch möglich, dass die Handwerkzeugmaschine 100 keine Bodenplatte 10 bzw. Grundplatte enthält. Eine als Bodenebene ausgestaltete Bodenebene GE wird durch eine im Arbeitsbetrieb ein Werkstück berührende Unterseite 11 einer Null-Grad-Stellung befindlichen und auf maximale Schnitttiefe eingerichteten Bodenplatte 10 der Handkreissäge 100 aufgespannt. Die durch Unterseite 11 der Bodenplatte 10 aufgespannte Bodenebene GE ist ebenfalls in der perspektivischen Darstellung der Fig. 2 verdeutlicht.

In Fig. 1 ist eine zu der Bodenebene GE parallel verlaufende Parallelebene PE dargestellt. Die in die Zeichenebene hinein weisende Rotationsachse R des als Sägeblatt ausgestalteten Werkzeugs 90 liegt in dieser Parallelebene PE. Der Schwenkpunkt SP liegt ausschließlich unterhalb dieser Parallelebene. Somit ist der hintere Handgriff 30 "unter" angeschlagen.

Ebenfalls in Fig. 1 dargestellt ist eine Achsebene AE, die durch die Rotationsachse R und durch einen Radius RA des Sägeblatts 90 aufgespannt ist. Die Achsebene AE schließt, ausgehend von einem in Vorschubrichtung V vor der Rotationsachse R gelegenen Abschnitt 12 der Bodenplatte 10 und in Drehrichtung D des Sägeblatts 90 einen Winkel genau 90 Grad ein.

Ebenfalls in Fig. 1 dargestellt ist, dass der Schwenkpunkt SP ausschließlich in einer dem vorderen Handgriff 20 zugewandten Raumseite einer Abstandsebene ABE liegt. Die Abstandsebene ABE liegt parallel zur Achsebene AE ist und weist zu dieser Achsebene AE einen Abstand AS auf, der im vorliegend dargestellten Ausführungsbeispiel etwa doppelt so groß ist, wie der maximal möglicher Sägeblattdurchmesser DB der Handkreissäge 100.

Die Bodenebene GE, die Achsebene AE, die Abstandsebene ABE und die Parallelebene PE schließen einen Raumbereich in Form eines Quaders ein, in dem der Schwenkpunkt SP angeordnet ist. Wie ebenfalls der Fig. 1 entnommen werden kann, verläuft die Schwenkachse S durch eine Stabilisierungsschiene 59 der Handkreissäge 100 und liegt, bezogen auf die Vertikale, unterhalb der Aufnahmebucht 50. Am Griffträger 25 ist sowohl die Bodenplatte 10 gelagert als auch der Elektromotor 60 beziehungsweise dessen Gehäuse befestigt. Der Schwenkpunkt SP liegt beabstandet vom Griffträger 25 des vorderen Handgriffs 20.

Mit Bezug auf Fig. 2 soll nun die Befestigung des hinteren Handgriffs 30 an der als Handkreissäge ausgestalteten Handwerkzeugmaschine 100 genauer erläutert werden.

Der hintere Handgriff 30 ist durch einen Zylinderstift 70, der koaxial zur Schwenkachse S verläuft, in einer Stiftaufnahme 71 einer Stabilisierungsschiene 59 der Handkreissäge 100 schwenkbar gelagert. Zu diesem Zweck weist der hintere Handgriff 30 eine hier nicht dargestellte Bohrung auf, durch die der Zylinderstift 70 verläuft. Fig. 2 zeigt den hinteren Handgriff 30 in eingeschwenktem Zustand EZ, sodass die Auf- oder Entnahme des Wechselakkus 200 in die oder aus der Aufnahmebucht 50 gesperrt ist.

Fig. 2 zeigt nunmehr, bezogen auf die Vorschubrichtung V, eine rückseitige Darstellung der als Handkreissäge ausgestalteten Handwerkzeugmaschine 100 aus Fig. 1. Der Darstellung der Fig. 2 ist zu entnehmen, dass das Sägeblatt 90 links vom Elektromotor 60 angeordnet ist. Alternativ kann das Sägeblatt 90 auch rechts vom Elektromotor 60 angeordnet sein. Die mit Bezug auf

Fig. 1 bereits erläuterte Bodenebene GE, die durch die Unterseite 11 der Bodenplatte 10 aufgespannt wird, ist aus Gründen der Deutlichkeit auch in der Darstellung der Fig. 2 eingezeichnet. Wie der Fig. 2 ebenfalls gut entnommen werden kann, liegt der Schwenkpunkt SP zwischen Bodenebene GE und Parallelebene PE. Die Rotationsachse R liegt wiederum in der Parallelebene PE.

Mit Bezug auf Fig. 2 soll nun ein Schwenkwinkel SW, der zwischen eingeschwenktem Zustand EZ und ausgeschwenktem Zustand AZ des hinteren Handgriffs 30 definiert ist, genauer erläutert werden. In Fig. 2 angedeutet ist ein Schwenkanschlag 34 und ein Gegenanschlag 36 im Bereich der Stiftaufnahme 71 (vgl. auch Fig. 1), die den Schwenkwinkel SW beschränken. Bei einem Schwenkwinkel von 0 Grad befindet sich der hintere Handgriff 30 im eingeschwenkten Zustand EZ, der beispielsweise den Fig. 1 und 2 entnommen werden kann.

Im Ausführungsbeispiel der Fig. 1 bis 4 beträgt ein durch den Schwenkanschlag 34 und den Gegenanschlag 36 beschränkter Schwenkwinkel SW zwischen eingeschwenkten Zustand EZ und ausgeschwenkten AZ des hinteren Handgriffs 30 genau 90 Grad. Der Schwenkwinkel SW ist vorliegend auf die Rotationsachse R bezogen.

Fig. 3 zeigt das Ausführungsbeispiel der Fig. 1 und 2, wobei in Fig. 3 der hintere Handgriff 30 in seinem ausgeschwenkten Zustand AZ dargestellt ist. Im ausgeschwenkten Zustand AZ ist die Aufnahmebucht 50 zur Auf- oder Entnahme des Wechselakkus 200 freigegeben. In Fig. 3 ist der Wechselakku 200 in der Aufnahmebucht aufgenommen. Ausgehend von dem eingeschwenkten Zustand EZ des hinteren Handgriffs 30 in Fig. 2, ist in Fig. 3 der vollständig ausgeschwenkte Zustand AZ mit einem Schwenkwinkel SW von 90 Grad dargestellt.

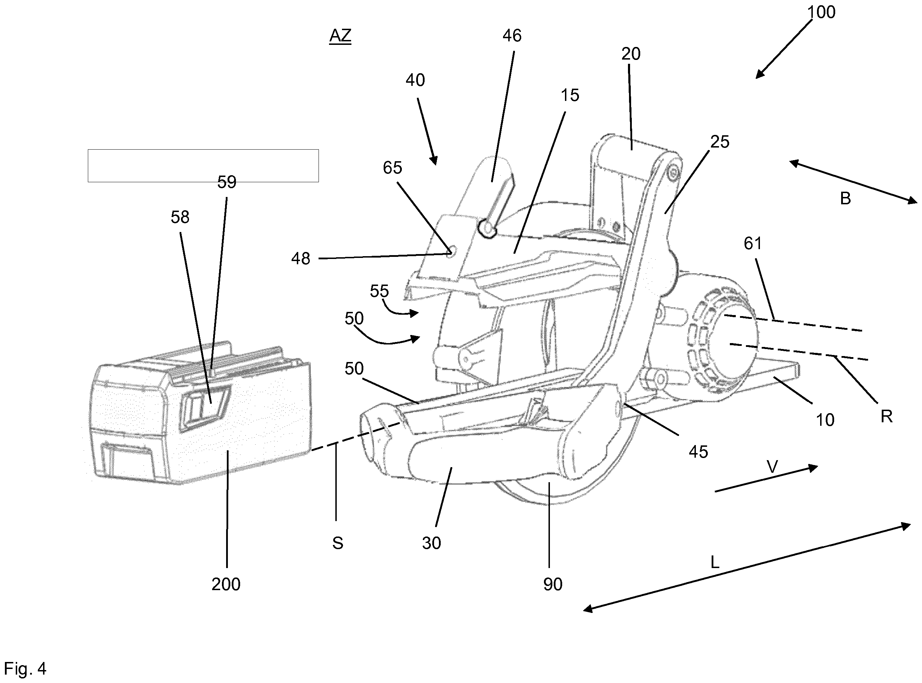

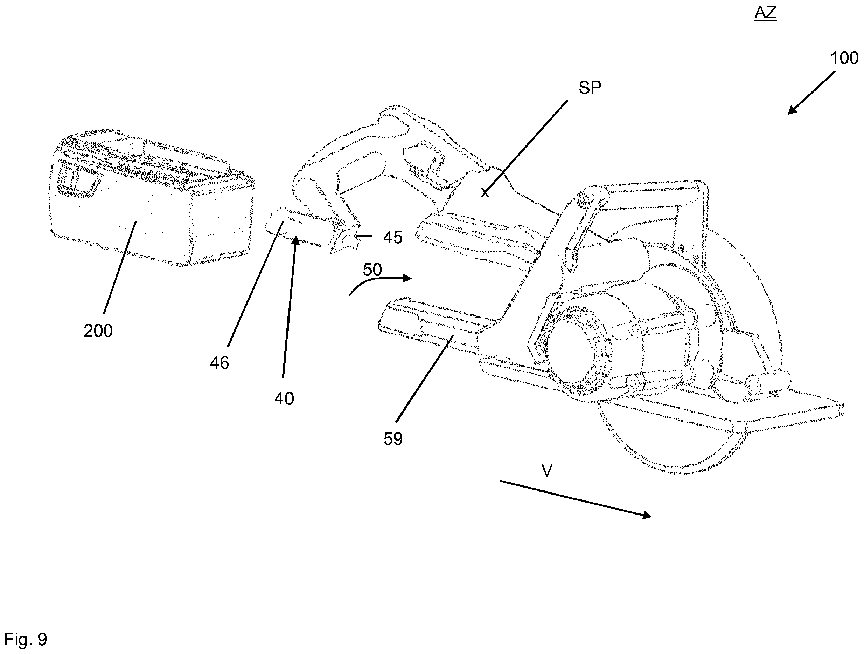

Im Folgenden sollen mit Bezug auf Fig. 4 besondere Sicherheitsmerkmale der als Handkreissäge ausgestalteten Handwerkzeugmaschine 100 erläutert werden. An einer Profilschiene 15 der Handkreissäge 100 ist ein Verriegelungsmechanismus 40 ausgebildet, mit dem der hintere Handgriff 30 in seinem eingeschwenkten Zustand EZ fixieren kann und bedarfsweise für eine Schwenkbewegung freigegeben werden kann. Der Verriegelungsmechanismus 40 weist ein mechanisches Schaltelement 46 auf, mittels dem ein am hinteren Handgriff angebrachter Zapfen 45 (vgl. auch Fig. 9) der in eine korrespondierende Ausnehmung 48 eingreifen kann, verriegelt werden kann.

Wie der Fig. 4 entnommen werden kann, ist die Ausnehmung 48 für das mechanische Schaltelement 45 an einer Profilschiene 15 ausgebildet, oberhalb der Aufnahmebucht 50 angeordnet ist. In eingeschwenktem Zustand EZ ist das Schaltelement 45 in der Ausnehmung 48 aufgenommen, was in Fig. 1 dargestellt ist.

In Fig. 4 wiederum dargestellt ist ein Sicherheitsschalter 65, der im in Fig. 4 dargestellten Ausführungsbeispiel innerhalb der Ausnehmung 48 angeordnet ist und durch den Zapfen 45 betätigt werden kann. Der Sicherheitsschalter 65 ist ausgebildet, im entriegelten Zustand des Verriegelungsmechanismus 40 und beim Vorliegen des ausgeschwenkten Zustands AZ eine Stromzufuhr zum Elektromotor 60 zu unterbrechen. Ist der Verriegelungsmechanismus 40 verriegelt beziehungsweise der hintere Handgriff 30 eingeschwenkt, wie dies in Fig. 1 der Fall ist, so signalisiert der Sicherheitsschalter 65, dass der Elektromotor 60 aktuiert werden darf.

Wie ebenfalls der Fig. 4 entnommen werden kann, weist die Handkreissäge 100 eine Profilschiene 15 auf. Diese Profilschiene 15 ist ausgebildet, dem hinteren Handgriff 30 eine Kontaktfläche, in der die Ausnehmung 48 ausgebildet ist, zu bieten. Ist der hinteren Handgriff 30 in eingeschwenktem Zustand EZ, befindlich (vgl. Fig. 1), ist der hintere Handgriff 30, durch den Zapfen 45 gegen ein unerwünschtes Verdrehen quer zur Schwenkachse S gesichert.

Unterhalb der Profilschiene 15 ist eine Schienenführung 55 ausgebildet, über die der Wechselakku 200 in die Aufnahmebucht 50 eingeschoben und aus dieser herausgezogen werden kann. Die Schienenführung 55 ist derart ausgebildet, dass ein Herausziehen des Wechselakkus 200 erst nach Betätigung eines Freigabeelements 58 am Wechselakku 200 möglich ist. Aus Fig. 4 nicht ersichtlich, ragt dafür eine durch das Freigabeelement 58 aktuierte Rastnase 59 in eine korrespondierende Ausnehmung (nicht gezeigt) an der Unterseite der Profilschiene 15 hinein.

Eine in Fig. 4 angedeutete Motorwelle 61 des Elektromotors 60 verläuft parallel zur Rotationsachse R des Sägeblatts 60. Grundsätzlich können Motorwelle 61 und Rotationsachse 60 bei allen Ausführungsbeispielen koaxial verlaufen. Auch eine parallel versetzter Verlauf von 61 und Rotationsachse 60 ist (wie dargestellt) denkbar, wenn beispielsweise ein Getriebe zwischen Motorwelle 61 und Sägeblatt 90 vorgesehen ist.

Eine maximale Länge L der als Handkreissäge ausgestalteten Handwerkzeugmaschine 100, bezogen auf die Vorschubrichtung V, ist zumindest doppelt so lang wie eine maximale Breite B der als Handkreissäge ausgestalteten Handwerkzeugmaschine 100, senkrecht zur Vorschubrichtung V.

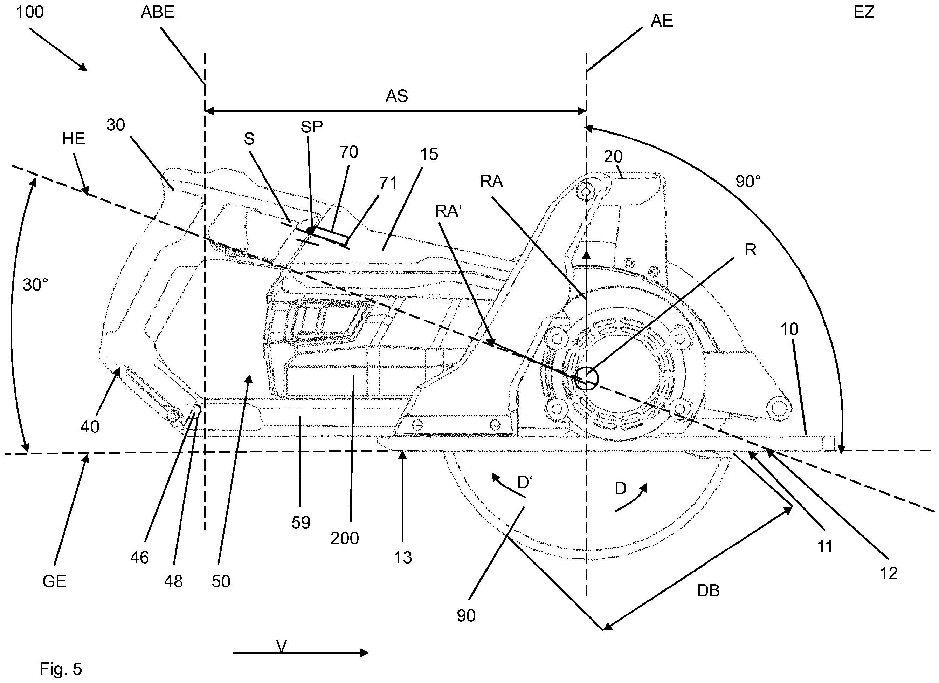

Ein zweites bevorzugtes Ausführungsbeispiel einer akkubetriebenen Handkreissäge 100 ist in Fig. 5 dargestellt. Die akkubetriebene Handkreissäge 100 weist einen Elektromotor 60 zum rotatorischen Antreiben eines an der Handkreissäge 100 angeordneten Sägeblatts 90 auf. Das Sägeblatt 90 wird rotatorisch um eine Rotationsachse R angetrieben, die vorliegend in die Zeichenebene hinein weist. Im bestimmungsgemäßen Sägebetrieb dreht sich das Sägeblatt 90 in Drehrichtung D. Mit anderen Worten: dreht sich das Sägeblatt 90 derart, dass die Handkreissäge 100 im Sägebetrieb an ein zu sägendes Werkstück (nicht gezeigt) herangezogen wird.

Im bestimmungsgemäßen Betrieb wird die Handkreissäge 100 in Vorschubrichtung V vorgeschoben. Die Vorschubrichtung ist in Fig. 5 mit einem horizontalen nach rechts weisenden Pfeil dargestellt. Die Handkreissäge 100 weist einen vorderen Handgriff 20 und einen hinteren Handgriff 30 auf. Bezogen auf die Vorschubrichtung V der Handkreissäge 100 ist der vordere Handgriff 20 vor dem hinteren Handgriff 30 angeordnet.

Des Weiteren weist die Handkreissäge 100 eine Aufnahmebucht 50 zur Aufnahme eines Wechselakkus 200 auf. In dem in Fig. 1 dargestellten Ausführungsbeispiel ist der Wechselakku 200 zum Betrieb des Elektromotors 60 der Handkreissäge 100 in der Aufnahmebucht 50 vollständig aufgenommen.

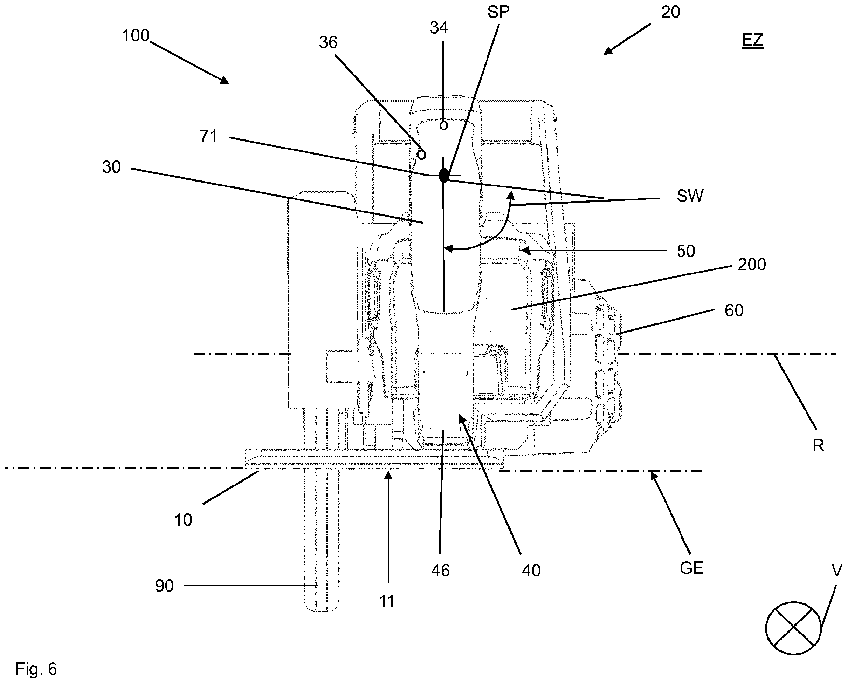

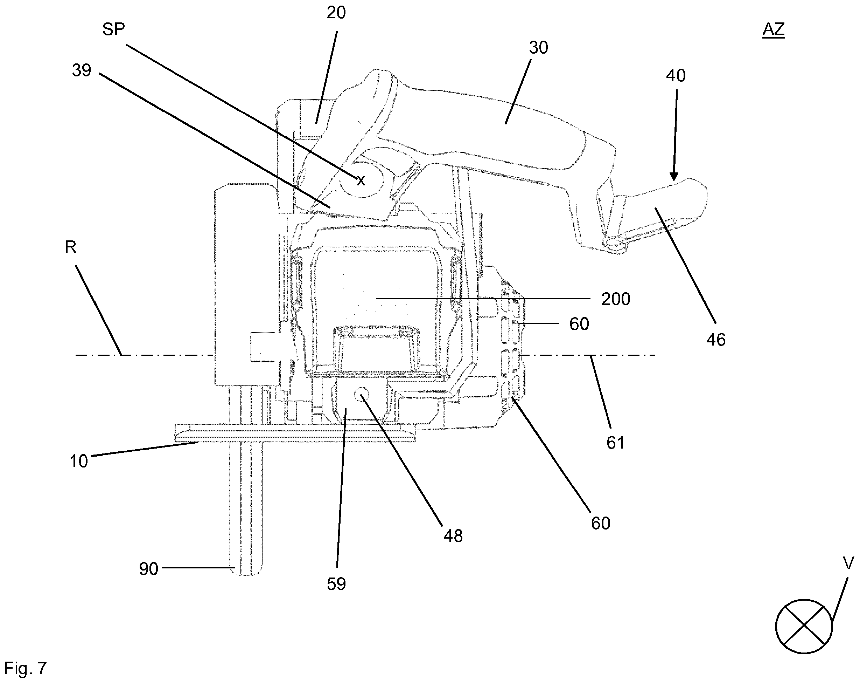

Erfindungsgemäß ist der hintere Handgriff 30 um eine Schwenkachse S schwenkbar gelagert. Der hintere Handgriff 30 ist derart um die Schwenkachse S schwenkbar gelagert, dass, wenn der hintere Handgriff 30 in einem ausgeschwenkten Zustand (vgl. Fig. 7) befindlich ist, die Aufnahmebucht 50 zur Auf- oder Entnahme des Wechselakkus 200 freigegeben ist. Ferner ist der hintere Handgriff 30 um die Schwenkachse S derart schwenkbar gelagert, dass, wenn der hintere Handgriff 30 in eingeschwenktem Zustand EZ (vgl. Fig. 5 und 6) befindlich ist, die Auf- oder Entnahme des Wechselakkus 200 in die oder aus der Aufnahmebucht 50 gesperrt ist.

Wie aus einer Zusammenschau von Fig. 6 und Fig. 7 ersichtlich wird, ist der hintere Handgriff 30 seitlich nach oben ausschwenkbar gelagert, d.h. der hintere Handgriff 30 schwenkt um einen gedachten Bogen (in Fig. 2 durch eine Pfeil angedeutet), dessen Krümmungsmittelpunkt auf der Schwenkachse S liegt.

Bei dem Ausführungsbeispiel der Fig. 5 ist die Schwenkachse S in Vorschubrichtung V der Handkreissäge 100 orientiert. Die Schwenkachse S liegt dabei nicht notwendigerweise parallel zur Vorschubrichtung V, sonder kann - wie aus Fig. 5 ersichtlich ist - leicht schräg zur Vorschubrichtung V verlaufen, beispielsweise mit einem maximalen Neigungswinkel von 340 Grad (in entgegengesetztem Uhrzeigersinn).

Die Schwenkachse S weist einen Schwenkpunkt SP auf, der ausschließlich oberhalb einer Bodenebene GE liegt. Die Bodenebene GE wird durch eine im Arbeitsbetrieb ein Werkstück berührende Unterseite 11 einer Null-Grad-Stellung befindlichen und auf maximale Schnitttiefe eingerichteten Bodenplatte 10 der Handkreissäge 100 aufgespannt. Die durch Unterseite 11 der Bodenplatte 10 aufgespannte Bodenebene GE ist ebenfalls in der rückseitigen Darstellung der Fig. 6 verdeutlicht.

Ebenfalls in Fig. 5 dargestellt ist eine Achsebene AE, die durch die Rotationsachse R und durch einen Radius RA des Sägeblatts 90 aufgespannt ist. Die Achsebene AE schließt, ausgehend von einem in Vorschubrichtung V vor der Rotationsachse R gelegenen Abschnitt 12 der Bodenplatte 10 und in Drehrichtung D des Sägeblatts 90 einen Winkel genau 90 Grad ein.

Ebenfalls in Fig. 5 dargestellt ist, dass der Schwenkpunkt SP ausschließlich in einer dem vorderen Handgriff 20 zugewandten Raumseite einer Abstandsebene ABE liegt. Die Abstandsebene ABE liegt parallel zur Achsebene AE und weist zu dieser Achsebene AE einen Abstand AS auf, der im vorliegend dargestellten Ausführungsbeispiel etwa doppelt so groß ist, wie der maximal möglicher Sägeblattdurchmesser DB der Handkreissäge 100.

Ebenfalls in Fig. 5 dargestellt ist eine Handgriffebene HE, die durch die Rotationsachse R und einen Radius RA' des Sägeblatts 90 aufgespannt ist. Die Handgriffebene HE schließt, ausgehend von einem in Vorschubrichtung V hinter der Rotationsachse R gelegenen Abschnitt 13 der Bodenplatte 10 und in entgegengesetzter Drehrichtung D des Sägeblatts 90 beispielhaft einen Winkel von 30 Grad ein. Der Schwenkpunkt SP liegt ausschließlich in einer dem vorderen Handgriff 20 zugewandten Raumseite der Handgriffebene HE. Somit ist der hintere Handgriff 30 "oben" angeschlagen. Wie ebenfalls der Fig. 5 entnommen werden kann, verläuft die Schwenkachse S durch eine Profilschiene 15 der Handkreissäge 100. Der Schwenkpunkt 15 liegt, bezogen auf die Vertikale, oberhalb der Aufnahmebucht 50.

Die Handgriffebene HE, die Achsebene AE, die Abstandsebene EBA und die Bodenebene definieren im vorliegend dargestellten Ausführungsbeispiel einen stumpfkeilförmigen Raumbereich, der frei von dem Schwenkpunkt 15 ist.

Fig. 6 zeigt nunmehr, bezogen auf die Vorschubrichtung V, eine rückseitige Darstellung der Handkreissäge 100 aus Fig. 5. Der Darstellung der Fig. 6 ist zu entnehmen, dass das Sägeblatt 90 links vom Elektromotor 60 angeordnet ist. Alternativ kann das als Sägeblatt ausgestaltete Werkzeug 90, bezogen auf die Vorschubrichtung V der Handwerkzeugmaschine 100, auch rechts vom Elektromotor 60 angeordnet sein. Die mit Bezug auf Fig. 5 bereits erläuterte Bodenebene GE, die durch die Unterseite 11 der Bodenplatte 10 aufgespannt wird, ist aus Gründen der Deutlichkeit auch in der Darstellung der Fig. 6 eingezeichnet. Wie der Fig. 2 ebenfalls gut entnommen werden kann, liegt der Schwenkpunkt SP oberhalb der Bodenebene GE und oberhalb des in der Aufnahmebucht 50 aufgenommenen Wechselakkus 200.

Mit Bezug auf Fig. 6 soll nun ein Schwenkwinkel SW, der zwischen eingeschwenktem Zustand EZ und ausgeschwenktem Zustand AZ des hinteren Handgriffs 30 definiert ist, genauer erläutert werden. In Fig. 6 angedeutet ist ein Schwenkanschlag 34 und ein Gegenanschlag 36 im Bereich der Stiftaufnahme 71 (vgl. auch Fig. 1), die den Schwenkwinkel SW beschränken. Der Schwenkanschlag 34 und der Gegenanschlag 36 sind beispielhaft zu verstehen und können durch entsprechende Ausnehmungen oder Auskragungen im Gehäuse der Handkreissäge 100 realisiert sein. Bei einem Schwenkwinkel von 0 Grad befindet sich der hintere Handgriff 30 im eingeschwenkten Zustand EZ, der beispielsweise auch der Fig. 5 entnommen werden kann.

Fig. 7 zeigt das Ausführungsbeispiel der Fig. 5 und 6, wobei in Fig. 7 der hintere Handgriff 30 in seinem ausgeschwenkten Zustand AZ dargestellt ist. Im ausgeschwenkten Zustand AZ ist die Aufnahmebucht 50 zur Auf- oder Entnahme des Wechselakkus 200 freigegeben. In Fig. 7 ist der Wechselakku 200 aus der Aufnahmebucht entnommen. Ausgehend von dem eingeschwenkten Zustand EZ des hinteren Handgriffs 30 in Fig. 6, ist in Fig. 7 der vollständig ausgeschwenkte Zustand AZ mit einem Schwenkwinkel von etwa 80 Grad (vgl. Fig. 7, definiert im entgegengesetzten Uhrzeigersinn) dargestellt.

Im Folgenden sollen mit Bezug auf die Fig. 6 bis 9 besondere Sicherheitsmerkmale der Handkreissäge 100 erläutert werden. Diese entsprechen im Wesentlichen den mit Bezug auf das erste Ausführungsbeispiel beschriebenen Sicherheitsmerkmalen, wobei lediglich deren Anordnung an der Hankreissäge 100 eine andere ist.

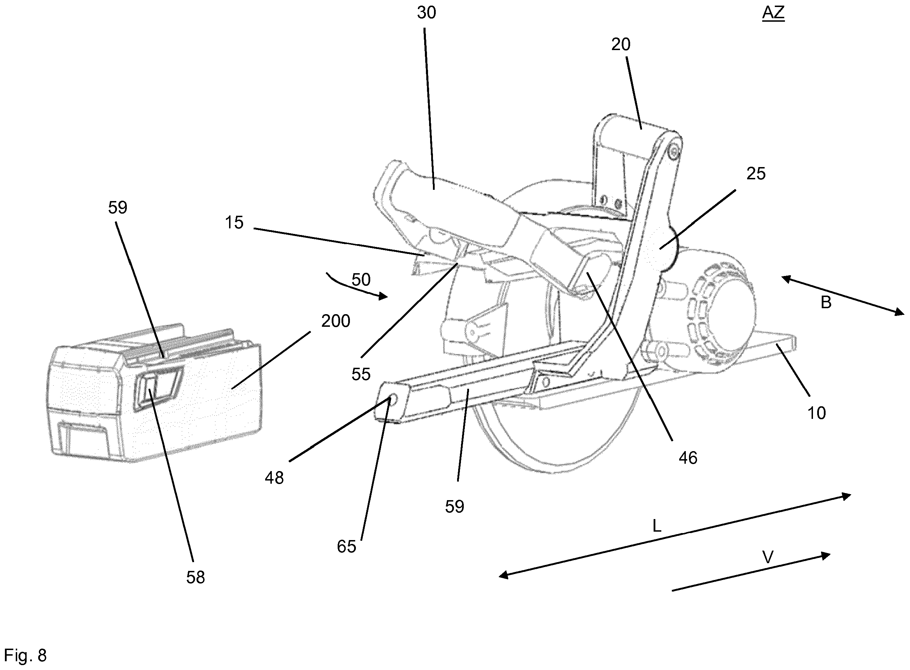

Am hinteren Handgriff 30 der Handkreissäge 100 ist ein Verriegelungsmechanismus 40 ausgebildet, mit dem der hintere Handgriff 30 in seinem eingeschwenkten Zustand EZ (vgl. Fig. 6) fixieren kann und bedarfsweise für eine Schwenkbewegung freigegeben werden kann. Der Verriegelungsmechanismus 40 weist ein mechanisches Schaltelement 46, mittels dem ein am hinteren Handgriff 30 angebrachter Zapfen 45 (vgl. Fig. 9) der in eine korrespondierende Ausnehmung 48 (vgl. Fig. 7 und 8) eingreifen kann, verriegelt werden kann.

Wie den Fig. 7 und 8 entnommen werden kann, ist die Ausnehmung 48 für den Zapfen 45 an einer Stabilisierungsschiene 59 ausgebildet, die unterhalb der Aufnahmebucht 50 angeordnet ist. In eingeschwenktem Zustand EZ ist das Schaltelement 45 in der Ausnehmung 48 aufgenommen, was in Fig. 5 dargestellt ist.

In Fig. 8 wiederum dargestellt ist ein Sicherheitsschalter 65, der im in Fig. 8 dargestellten Ausführungsbeispiel innerhalb der Ausnehmung 48 angeordnet ist und durch den Zapfen 45 (vgl. Fig. 9) betätigt werden kann. Der Sicherheitsschalter 65 ist ausgebildet, im entriegelten Zustand des Verriegelungsmechanismus 40 und beim Vorliegen des ausgeschwenkten Zustands AZ eine Stromzufuhr zum Elektromotor 60 zu unterbrechen. Ist der Verriegelungsmechanismus 40 verriegelt beziehungsweise der hintere Handgriff 30 eingeschwenkt, wie dies in Fig. 5 der Fall ist, so signalisiert der Sicherheitsschalter 65, dass der Elektromotor 60 aktuiert werden darf.

Wie ebenfalls der Fig. 8 entnommen werden kann, weist die Handkreissäge 100 eine Stabilisierungsschiene 59 auf. Diese Stabilisierungsschiene 59 ist ausgebildet, dem hinteren Handgriff 30 eine Kontaktfläche, in der die Ausnehmung 48 ausgebildet ist, zu bieten. Ist der hinteren Handgriff 30 in eingeschwenktem Zustand EZ, befindlich (vgl. Fig. 5), ist der hintere Handgriff 30, durch den Zapfen 45 gegen ein unerwünschtes Verdrehen quer zur Schwenkachse S gesichert.

Unterhalb einer von der Handkreissäge umfassten Profilschiene 15 ist eine Schienenführung 55 ausgebildet, über die der Wechselakku 200 in die Aufnahmebucht 50 eingeschoben und aus dieser herausgezogen werden kann. Die Schienenführung 55 ist derart ausgebildet, dass ein Herausziehen des Wechselakkus 200 erst nach Betätigung eines Freigabeelements 58 am Wechselakku 200 möglich ist. Aus Fig. 8 ersichtlich, ragt dafür eine durch das Freigabeelement 58 aktuierte Rastnase 59 in eine korrespondierende Ausnehmung (nicht gezeigt) an der Unterseite der Profilschiene 15 hinein.

Eine in Fig. 7 angedeutete Motorwelle 61 des Elektromotors 60 verläuft parallel zur Rotationsachse R des als Sägeblatt ausgestalteten Werkzeugs 90. Grundsätzlich können Motorwelle 61 und Rotationsachse 60 bei allen Ausführungsbeispielen koaxial verlaufen. Auch ein parallel versetzter Verlauf von 61 und Rotationsachse 60 ist (wie dargestellt) denkbar, wenn beispielsweise ein Getriebe zwischen Motorwelle 61 und Sägeblatt 90 vorgesehen ist. Die als Handkreissäge ausgestaltete Handwerkzeugmaschine 100 weist ferner einen hier nicht genauer dargestellten Rastmechanismus 39 auf, der ausgebildet ist, den hinteren Handgriff 30 in dem dargestellten ausgeschwenkten Zustand AZ sicher zu halten, bis zum Überwinden einer Federsperrkraft durch den Anwender.

Eine maximale Länge L der als Handkreissäge ausgestalteten Handwerkzeugmaschine 100, bezogen auf die Vorschubrichtung V, ist zumindest doppelt so lang wie eine maximale Breite B der als Handkreissäge ausgestalteten Handwerkzeugmaschine 100, senkrecht zur Vorschubrichtung V (vgl. Fig. 8).

### Bezugszeichenliste

- 10: Bodenplatte
- 11: Unterseite der Bodenplatte
- 12: vorlaufender Abschnitt
- 13: nachlaufender Abschnitt
- 15: Profilschiene
- 20: vorderer Handgriff
- 25: Griffträger des vorderen Handgriffs
- 30: hinterer Handgriff
- 31: Handangriffsfläche
- 32: Schwenkabschnitt
- 34: Schwenkanschlag
- 36: Gegenanschlag
- 38: Profil des Schwenkarms
- 39: Rastmechanismus
- 40: Verriegelungsmechanismus
- 45: Zapfen
- 46: mechanisches Schaltelement
- 48: Ausnehmung
- 50: Aufnahmebucht
- 55: Schienenführung
- 58: Freigabeelement
- 59: Stabilisierungsschiene
- 60: Elektromotor
- 61: Motorwelle
- 65: Sicherheitsschalter
- 70: Zylinderstift
- 71: Stiftaufnahme
- 90: Werkzeug
- 100: Handwerkzeugmaschine
- 200: Wechselakku
- AE: Achsebene
- ABE: Abstandsebene
- GE: Bodenebene
- PE: Parallelebene
- D: Drehachse
- R: Rotationsachse
- RA, RA': Radius
- S: Schwenkachse
- SW: Schwenkwinkel
- V: Vorschubrichtung

## Patentansprüche

1. Akkubetriebene Handwerkzeugmaschine (100), insbesondere Handkreissäge, mit einem Elektromotor (60) zum rotatorischen Antreiben eines an der Handwerkzeugmaschine (100) anzuordnenden Werkzeugs (90), einem, jeweils bezogen auf eine Vorschubrichtung (V) der Handwerkzeugmaschine (100), vorderen (20) und hinteren Handgriff (30), und mit einer Aufnahmebucht (50) zur Aufnahme eines Wechselakkus (200),
wobei der hintere Handgriff (30) um eine Schwenkachse (S) vorzugsweise seitlich ausschwenkbar gelagert ist, derart dass, wenn der hintere Handgriff (30) in einem ausgeschwenkten Zustand (AZ) befindlich ist, die Aufnahmebucht (50) zur Auf- oder Entnahme des Wechselakkus (200) freigegeben ist, **dadurch gekennzeichnet, dass** wenn der hintere Handgriff (30) in einem eingeschwenkten Zustand (EZ) befindlich ist, die Auf- oder Entnahme des Wechselakkus (200) in die oder aus der Aufnahmebucht (50) gesperrt ist.

2. Handwerkzeugmaschine (100) nach Anspruch 1,
**dadurch gekennzeichnet, dass** die Schwenkachse (S) in Vorschubrichtung (V) der Handwerkzeugmaschine (100) orientiert ist und die Schwenkachse (S) einen Schwenkpunkt (SP) aufweist, der oberhalb einer Bodenebene (GE) und/oder unterhalb einer zu dieser Bodenebene (GE) parallelen Parallelebene (PE) liegt, wobei die Bodenebene (GE) durch eine im Arbeitsbetrieb ein Werkstück berührende Unterseite (11) einer in Null-Grad-Stellung befindlichen und auf maximale Schnitttiefe eingerichteten Bodenplatte (10) der Handwerkzeugmaschine (100) aufgespannt wird.

3. Handwerkzeugmaschine (100) nach Anspruch 2,
**dadurch gekennzeichnet, dass** der Schwenkpunkt vorzugsweise ausschließlich in einer dem hinteren Handgriff (30) zugewandten Raumseite einer Achsebene (AE) liegt, wobei die Achsebene (AE) durch die Rotationsachse (R) und einen Radius (RA) des Werkzeugs (90) aufgespannt ist, wobei die Achsebene (AE), ausgehend von einem in Vorschubrichtung (V) vor der Rotationsachse (R) gelegenen Abschnitt (11) einer Bodenebene (GE) und in Drehrichtung (DR) des Werkzeugs (90), einen Winkel von 90 Grad einschließt.

4. Handwerkzeugmaschine (100) nach Anspruch 2 oder 3,
**dadurch gekennzeichnet, dass** der Schwenkpunkt (SP) vorzugsweise ausschließlich in einer dem vorderen Handgriff (20) zugewandten Raumseite einer Abstandsebene (ABE) liegt, wobei die Abstandsebene (ABE) parallel zur Achsebene (AE) ist und zu dieser Achsebene (AE) einen Abstand (AS) aufweist, der genau so groß und/oder höchstens doppelt so groß ist, wie ein maximal möglicher Werkzeugdurchmesser (DB) einer jeweiligen Handwerkzeugmaschine (100).

5. Handwerkzeugmaschine (100) nach einem der Ansprüche 2 bis 4,
**dadurch gekennzeichnet, dass** der Schwenkpunkt (SP) vorzugsweise ausschließlich in einer dem vorderen Handgriff (20) zugewandten Raumseite einer Handgriffebene (HE) liegt, wobei die Handgriffebene (HE) durch die Rotationsachse (R) und einen Radius (RA) des Werkzeugs (90) aufgespannt ist, wobei Handgriffebene (HE), ausgehend von einem in Vorschubrichtung (V) hinter der Rotationsachse (R) gelegenen Abschnitt (13) einer Bodenebene (GE) und in entgegengesetzter Drehrichtung (D') des Werkzeugs (90), einen Winkel von wenigstens 20 Grad und vorzugsweise wenigstens 30 Grad einschließt.

6. Handwerkzeugmaschine (100) nach einem der vorangehenden Ansprüche,
**dadurch gekennzeichnet, dass** die Schwenkachse (S) durch einen Zylinderstift (70) verläuft, der in einer Stiftaufnahme (71) gelagert ist.

7. Handwerkzeugmaschine (100) nach einem der vorangehenden Ansprüche,
**dadurch gekennzeichnet, dass** ein durch einen Schwenkanschlag (34) und einen Gegenanschlag (36) beschränkter Schwenkwinkel (SW) zwischen eingeschwenkten Zustand (EZ) und ausgeschwenkten (AZ) des hinteren Handgriffs (30) größer als 30 Grad ist, vorzugsweise 90 Grad beträgt und höchsten 330 Grad ist.

8. Handwerkzeugmaschine (100) nach einem der vorangehenden Ansprüche,
**dadurch gekennzeichnet, dass** die Handwerkzeugmaschine (100) einen Rastmechanismus (39) aufweist, der ausgebildet ist, den hinteren Handgriff (30) in dem ausgeschwenkten Zustand sicher zu halten, vorzugsweise bis zum Überwinden einer Federsperrkraft durch den Anwender.

9. Handwerkzeugmaschine (100) nach einem der vorangehenden Ansprüche,
**dadurch gekennzeichnet, dass** der hintere Handgriff (30) einen Verriegelungsmechanismus (40) aufweist, der ausgebildet ist, den hinteren Handgriff (30) in seinem eingeschwenkten Zustand (EZ) zu fixieren und bedarfsweise für eine Schwenkbewegung freizugeben.

10. Handwerkzeugmaschine (100) nach Anspruch 9,
**dadurch gekennzeichnet, dass** unterhalb der Aufnahmebucht (50) eine Stabilisierungsschiene (59) angeordnet ist, die vorzugsweise entgegen der Vorschubrichtung (V) über die Aufnahmebucht (50) hinaus auskragt und an der der hintere Handgriff (30) in seinem eingeschwenkten Zustand (EZ) fixiert werden kann.

11. Handwerkzeugmaschine (100) nach Anspruch 10,
**dadurch gekennzeichnet, dass** der Verriegelungsmechanismus (40) einen Zapfen (46) umfasst, der in eine dafür vorgesehene Ausnehmung (48), die an der Stabilisierungsschiene (59) ausgebildet ist, eingreifen kann, wenn der hintere Handgriff (30) im eingeschwenkten Zustand ist.

12. Handwerkzeugmaschine (100) nach einem der Ansprüche 9 bis 11,
**dadurch gekennzeichnet, dass** ein Sicherheitsschalter (65) mit dem hinteren Handgriff (30) verbunden ist und ausgebildet ist, in dem entriegelten Zustand des Verriegelungsmechanismus (40) und/oder beim Vorliegen des ausgeschwenkten Zustands eine Stromzufuhr zum Elektromotor (60) zu unterbrechen.

13. Handwerkzeugmaschine (100) nach einem der vorangehenden Ansprüche,
**dadurch gekennzeichnet, dass** die Aufnahmebucht (50) eine Schienenführung (55) aufweist über die der Wechselakku (200) in die Aufnahmebucht (50) eingeschoben und aus dieser heraus ausgezogen werden kann, wobei die Schienenführung (55) und/oder der Wechselakku (200) vorzugsweise derart ausgebildet ist, dass ein Herausziehen des Wechselakkus (200) erst nach Betätigung eines Freigabeelements (58) möglich ist.

14. Handwerkzeugmaschine (100) nach einem der vorangehenden Ansprüche,
**dadurch gekennzeichnet, dass** eine Handangriffsfläche (31) des hinteren Handgriffs (30), bezogen auf die Vorschubrichtung (V) der Handwerkzeugmaschine (100), hinter dem in der Aufnahmebucht (50) aufgenommenen Wechselakku (200) aufgenommen ist.

15. Handwerkzeugmaschine (100) nach einem der vorangehenden Ansprüche,
**dadurch gekennzeichnet, dass** das Werkzeug (90), bezogen auf die Vorschubrichtung (V) der Handwerkzeugmaschine (100), links vom Elektromotor (60) angeordnet ist, die Ausgangswelle des Elektromotors (60) parallel zur Rotationsachse (R) des Werkzeugs (90) verläuft, und wobei die Handwerkzeugmaschine (100) zumindest doppelt so lang wie breit ausgebildet ist.

16. Handwerkzeugmaschine (100) nach einem der vorangehenden Ansprüche,
**dadurch gekennzeichnet, dass** das Werkzeug (90), bezogen auf die Vorschubrichtung (V) der Handwerkzeugmaschine (100), rechts vom Elektromotor (60) angeordnet ist, die Ausgangswelle des Elektromotors (60) parallel zur Rotationsachse (R) des Werkzeugs (90) verläuft, und wobei die Handwerkzeugmaschine (100) zumindest doppelt so lang wie breit ausgebildet ist.

## Claims

1. Battery-operated hand-held power tool (100), in particular a hand-held circular saw, comprising an electric motor (60) for rotationally driving a tool (90) to be arranged on the hand-held power tool (100), and comprising, in each case based on an advance direction (V) of the hand-held power tool (100), a front (20) and rear handle (30), and comprising a receiving recess (50) for receiving a replaceable battery (200), the rear handle (30) being mounted such that it can be pivoted out preferably sideways about a pivot axis (S) in such a way that, when the rear handle (30) is in a pivoted-out state (AZ), the receiving recess (50) is released for receiving or removing the replaceable battery (200), **characterized in that**, when the rear handle (30) is in a pivoted-in state (EZ), the receiving or removal of the replaceable battery (200) in or out of the receiving recess (50) is blocked.

2. Hand-held power tool (100) according to claim 1, **characterized in that** the pivot axis (S) is oriented in the advance direction (V) of the hand-held power tool (100) and the pivot axis (S) has a pivot point (SP) which is above a base plane (GE) and/or below a parallel plane (PE) parallel to said base plane (GE), the base plane (GE) being spanned by an underside (11), which touches a workpiece during working operation, of a base plate (10) of the hand-held power tool (100), which base plate is in the zero degree position and is set to maximum cutting depth.

3. Hand-held power tool (100) according to claim 2, **characterized in that** the pivot point is preferably exclusively in a spatial side of an axis plane (AE) facing the rear handle (30), the axis plane (AE) being spanned by the axis of rotation (R) and a radius (RA) of the tool (90), the axis plane (AE), starting from a portion (11) of a base plane (GE) located in front of the axis of rotation (R) in the advance direction (V) and in the direction of rotation (DR) of the tool (90), including an angle of 90 degrees.

4. Hand-held power tool (100) according to either claim 2 or claim 3, **characterized in that** the pivot point (SP) is preferably exclusively in a spatial side of a spacing plane (ABE) facing the front handle (20), the spacing plane (ABE) being parallel to the axis plane (AE) and being at a distance (AS) from this axis plane (AE) which is exactly as large and/or at most twice as large as a maximum possible tool diameter (DB) of a relevant hand-held power tool (100).

5. Hand-held power tool (100) according to any of claims 2 to 4, **characterized in that** the pivot point (SP) is preferably exclusively in a spatial side of a handle plane (HE) facing the front handle (20), the handle plane (HE) being spanned by the axis of rotation (R) and a radius (RA) of the tool (90), the handle plane (HE), starting from a portion (13) of a base plane (GE) located behind the axis of rotation (R) in the advance direction (V) and in the opposite direction of rotation (D') of the tool (90), including an angle of at least 20 degrees and preferably at least 30 degrees.

6. Hand-held power tool (100) according to any of the preceding claims, **characterized in that** the pivot axis (S) extends through a cylindrical pin (70) which is mounted in a pin receptacle (71).

7. Hand-held power tool (100) according to any of the preceding claims, **characterized in that** a pivot angle (SW) between the pivoted-in state (EZ) and pivoted-out (AZ) of the rear handle (30), which angle is limited by a pivot stop (34) and a counter-stop (36), is greater than 30 degrees, preferably 90 degrees and at most 330 degrees.

8. Hand-held power tool (100) according to any of the preceding claims, **characterized in that** the hand-held power tool (100) has a latching mechanism (39) which is designed to hold the rear handle (30) securely in the pivoted-out state, preferably until the user overcomes a spring locking force.

9. Hand-held power tool (100) according to any of the preceding claims, **characterized in that** the rear handle (30) has a locking mechanism (40) which is designed to fix the rear handle (30) in its pivoted-in state (EZ) and, if necessary, to release it for a pivoting movement.

10. Hand-held power tool (100) according to claim 9, **characterized in that** a stabilizing rail (59) is arranged below the receiving recess (50), which preferably protrudes beyond the receiving recess (50) counter to the advance direction (V) and on which the rear handle (30) can be fixed in its pivoted-in state (EZ).

11. Hand-held power tool (100) according to claim 10, **characterized in that** the locking mechanism (40) comprises a pin (46) which can engage in a recess (48) which is provided for this purpose and is formed in the stabilizing rail (59), when the rear handle (30) is in the pivoted-in state.

12. Hand-held power tool (100) according to any of claims 9 to 11, **characterized in that** a safety switch (65) is connected to the rear handle (30) and is designed to interrupt a power supply to the electric motor (60) in the unlocked state of the locking mechanism (40) and/or in the pivoted-out state.

13. Hand-held power tool (100) according to any of the preceding claims, **characterized in that** the receiving recess (50) has a rail guide (55) via which the replaceable battery (200) can be pushed into and pulled out of the receiving recess (50), the rail guide (55) and/or the replaceable battery (200) preferably being designed in such a way that the replaceable battery (200) can be pulled out only after a release element (58) has been actuated.

14. Hand-held power tool (100) according to any of the preceding claims, **characterized in that** a hand engagement surface (31) of the rear handle (30) is received behind the replaceable battery (200) received in the receiving recess (50), based on the advance direction (V) of the hand-held power tool (100).

15. Hand-held power tool (100) according to any of the preceding claims, **characterized in that** the tool (90), based on the advance direction (V) of the hand-held power tool (100), is arranged to the left of the electric motor (60), the output shaft of the electric motor (60) extends in parallel with the axis of rotation (R) of the tool (90), and the hand-held power tool (100) being at least twice as long as it is wide.

16. Hand-held power tool (100) according to any of the preceding claims, **characterized in that** the tool (90), based on the advance direction (V) of the hand-held power tool (100), is arranged to the right of the electric motor (60), the output shaft of the electric motor (60) extends in parallel with the axis of rotation (R) of the tool (90), and the hand-held power tool (100) being at least twice as long as it is wide.

## Revendications

1. Machine-outil à main (100) alimentée par batterie, en particulier scie circulaire à main, comportant un moteur électrique (60) destiné à entraîner en rotation un outil (90) à disposer sur la machine-outil à main (100), une poignée avant (20) et une poignée arrière (30) respectivement par rapport à un sens d'avance (V) de la machine-outil à main (100), et un compartiment de logement (50) destiné à loger une batterie interchangeable (200),
la poignée arrière (30) étant montée de manière à pouvoir être déployée de préférence latéralement autour d'un axe de pivotement (S) de telle sorte que, lorsque la poignée arrière (30) se trouve dans une position déployée (AZ), le compartiment de logement (50) est libéré pour le logement ou le retrait de la batterie interchangeable (200), **caractérisée en ce que**, lorsque la poignée arrière (30) se trouve dans une position rabattue (EZ), le logement ou le retrait de la batterie interchangeable (200) dans ou hors du compartiment de logement (50) est bloqué.

2. Machine-outil à main (100) selon la revendication 1,
**caractérisée en ce que** l'axe de pivotement (S) est orienté dans le sens d'avance (V) de la machine-outil à main (100) et que l'axe de pivotement (S) présente un point de pivotement (SP) qui se trouve au-dessus d'un plan de sol (GE) et/ou au-dessous d'un plan parallèle (PE) qui est parallèle à ce plan de sol (GE), le plan de sol (GE) étant défini par un côté inférieur (11), lequel est en contact avec une pièce pendant le fonctionnement, d'une plaque de sol (10) de la machine-outil à main (100), laquelle plaque de sol est positionnée à zéro degré et réglée sur la profondeur de coupe maximale.

3. Machine-outil à main (100) selon la revendication 2,
**caractérisée en ce que** le point de pivotement se trouve de préférence uniquement au niveau d'un côté spatial d'un plan d'axe (AE), lequel côté spatial fait face à la poignée arrière (30), le plan d'axe (AE) étant défini par l'axe de rotation (R) et par un rayon (RA) de l'outil (90), le plan d'axe (AE) formant un angle de 90 degrés en partant d'une section (11) d'un plan de sol (GE), se trouvant devant l'axe de rotation (R) dans le sens d'avance (V), et dans le sens de rotation (DR) de l'outil (90).

4. Machine-outil à main (100) selon la revendication 2 ou 3,
**caractérisée en ce que** le point de pivotement (SP) se trouve de préférence uniquement au niveau d'un côté spatial d'un plan d'écartement (ABE), lequel côté spatial fait face à la poignée avant (20), le plan d'écartement (ABE) étant parallèle au plan d'axe (AE) et présentant un écartement (AS) par rapport à ce plan d'axe (AE) qui est exactement égal et/ou au plus deux fois plus grand qu'un diamètre d'outil maximal possible (DB) d'une machine-outil à main respective (100).

5. Machine-outil à main (100) selon l'une des revendications 2 à 4,
**caractérisée en ce que** le point de pivotement (SP) se trouve de préférence uniquement au niveau d'un côté spatial d'un plan de poignée (HE), lequel côté spatial fait face à la poignée avant (20), le plan de poignée (HE) étant défini par l'axe de rotation (R) et par un rayon (RA) de l'outil (90), le plan de poignée (HE) formant un angle d'au moins 20 degrés et de préférence d'au moins 30 degrés en partant d'une section (13) d'un plan de sol (GE), se trouvant derrière l'axe de rotation (R) dans le sens d'avance (V), et dans le sens de rotation opposé (D') de l'outil (90).

6. Machine-outil à main (100) selon l'une des revendications précédentes,
**caractérisée en ce que** l'axe de pivotement (S) s'étend à travers une goupille cylindrique (70) qui est montée dans un logement de goupille (71).

7. Machine-outil à main (100) selon l'une des revendications précédentes,
**caractérisée en ce qu'**un angle de pivotement (SW) entre la position rabattue (EZ) et la position déployée (AZ) de la poignée arrière (30), et limité par une butée de pivotement (34) et une contre-butée (36), est supérieur à 30 degrés, de préférence de 90 degrés et de 330 degrés au plus.

8. Machine-outil à main (100) selon l'une des revendications précédentes,
**caractérisée en ce que** la machine-outil à main (100) présente un mécanisme d'encliquetage (39) qui est conçu pour maintenir fermement la poignée arrière (30) dans la position déployée, de préférence jusqu'à ce qu'un utilisateur surmonte une force d'arrêt par ressort.

9. Machine-outil à main (100) selon l'une des revendications précédentes,
**caractérisée en ce que** la poignée arrière (30) présente un mécanisme de verrouillage (40) qui est conçu pour fixer la poignée arrière (30) dans sa position rabattue (EZ) et, si nécessaire, pour la libérer en vue d'un mouvement de pivotement.

10. Machine-outil à main (100) selon la revendication 9,
**caractérisée en ce qu'**un rail de stabilisation (59) est disposé au-dessous du compartiment de logement (50), lequel rail de stabilisation dépasse de préférence du compartiment de logement (50) dans le sens opposé au sens d'avance (V), et la poignée arrière (30), dans sa position rabattue (EZ), pouvant être fixée sur le rail de stabilisation.

11. Machine-outil à main (100) selon la revendication 10,
**caractérisée en ce que** le mécanisme de verrouillage (40) comprend un tourillon (46) qui, lorsque la poignée arrière (30) est en position rabattue, peut venir en prise dans un évidement (48) prévu à cet effet, l'évidement étant réalisé sur le rail de stabilisation (59).

12. Machine-outil à main (100) selon l'une des revendications 9 à 11,
**caractérisée en ce qu'**un interrupteur de sécurité (65) est relié à la poignée arrière (30) et est conçu pour interrompre une alimentation du moteur électrique (60) lorsque le mécanisme de verrouillage (40) est dans la position déverrouillée et/ou en cas de position déployée.

13. Machine-outil à main (100) selon l'une des revendications précédentes,
**caractérisée en ce que** le compartiment de logement (50) présente un guidage de rail (55) par l'intermédiaire duquel la batterie interchangeable (200) peut être insérée ou extraite dans ou hors du compartiment de logement (50), le guidage de rail (55) et/ou la batterie interchangeable (200) étant de préférence conçus de telle manière que la batterie interchangeable (200) ne peut être extraite qu'après l'actionnement d'un élément de libération (58).

14. Machine-outil à main (100) selon l'une des revendications précédentes,
**caractérisée en ce qu'**une surface de préhension (31) de la poignée arrière (30) est logée derrière la batterie interchangeable (200) logée dans le compartiment de logement (50), par rapport au sens d'avance (V) de la machine-outil à main (100).

15. Machine-outil à main (100) selon l'une des revendications précédentes,
**caractérisée en ce que** l'outil (90) est disposé à gauche du moteur électrique (60) par rapport au sens d'avance (V) de la machine-outil à main (100), l'arbre de sortie du moteur électrique (60) s'étendant parallèlement à l'axe de rotation (R) de l'outil (90), et la longueur de la machine-outil à main (100) étant au moins deux fois plus grande que sa largeur.

16. Machine-outil à main (100) selon l'une des revendications précédentes,
**caractérisée en ce que** l'outil (90) est disposé à droite du moteur électrique (60) par rapport au sens d'avance (V) de la machine-outil à main (100), l'arbre de sortie du moteur électrique (60) s'étendant parallèlement à l'axe de rotation (R) de l'outil (90), et la longueur de la machine-outil à main (100) étant au moins deux fois plus grande que sa largeur.
